# EUROPEAN PATENT APPLICATION

(11) **EP 4 726 375 A1**
(43) Date of publication of application: **15.04.2026**
(21) Application number: 25207469.5
(22) Date of filing: 08.10.2025
(51) Int. Cl.: G01N 23/04, G01N 23/083, G01N 23/18

(54) **X-RAY DEVICE**

(30) Priority: 10.10.2024 JP 2024177732
(71) Applicant: Ishida Co., Ltd., Sakyo-ku Kyoto-shi Kyoto 606-8392 (JP)
(72) Inventor: OSE, Akane, Ritto-shi, Shiga 520-3026 (JP); SUGIMOTO, Kazuyuki, Ritto-shi, Shiga 520-3026 (JP)
(74) Representative: Global IP Europe Patentanwaltskanzlei

(57) **Abstract**

An X-ray device 10 comprises a conveyor to convey an article, an X-ray irradiator 13, an X-ray line sensor 14 to detect X-rays in a detection range within which the article is conveyed, and a control computer 20. The control computer 20 compares a detection value from the X-ray line sensor 14 and a threshold value to sense the front end and the rear end of the article, the control computer 20 having a first threshold value and a second threshold value as threshold values. The control computer 20 switches the threshold value from the first threshold value to the second threshold value after the front end of the article has passed through the detection region and before the rear end of the article passes through the detection region.

## Description

### TECHNICAL FIELD

The present invention relates to an X-ray device.

### BACKGROUND ART

Patent Document 1 (Japanese Laid-open Patent Publication No. 2009-270866) discloses a device with which articles for inspection are irradiated with X-rays and subjected to a variety of inspections. Articles evaluated as defectives by the device are sorted by a sorting mechanism disposed downstream of the device and recovered in a recovery bin at a location set apart from a conveying path.

### SUMMARY OF THE INVENTION

### <Problem to be Solved by Invention>

The device described above is configured to identify the conveying-direction length of individual articles on the basis of a result of detection performed by an X-ray detection unit and send information pertaining to said length to the sorting mechanism, and is configured such that a sorting action is performed at an appropriate timing.

However, in an inspection line for, e.g., chicken meat, articles (pieces of chicken meat) might be conveyed in a state in which a skin portion is stretched rearward from a main portion of the meat. In such a case, it might be impossible to sense that the main portion and the skin portion, which are of different thickness, are parts of the same article, and the device might erroneously recognize the main portion as a first article and the skin portion as a second article. Two pieces of information in which the length of the first article and the length of the second article are incorrect then get sent to a sorting device; however, because a single article is actually involved, the sorting action might get performed when either the first article or the second article is conveyed. This might lead to an adverse event in which the single article will not be properly recovered in the defectives-recovery bin.

It is an object of the present invention to provide an X-ray device in which the incidence of erroneous recognition of the length of a conveyed article is suppressed.

### <Means for Solving Problem>

An X-ray device according to a first aspect of the present invention comprises a conveying unit, an X-ray irradiation unit, an X-ray detection unit, and a control unit. The conveying unit conveys an article. The X-ray irradiation unit irradiates the article being conveyed by the conveying unit with X-rays. The X-ray detection unit detects X-rays in a detection region within which the article is conveyed. The control unit compares a detection value from the X-ray detection unit and a threshold value to sense the conveying-direction front end and the conveying-direction rear end of the article. The control unit has a first threshold value and a second threshold value as threshold values. The control unit switches the threshold value from the first threshold value to the second threshold value after the front end of the article has passed through the detection region and before the rear end of the article passes through the detection region.

In the X-ray device according to the first aspect, after the front end of the article has passed through the detection region, the threshold value is switched from the first threshold value to the second threshold value until the rear end of the article passes through the detection region. Therefore, articles in which, e.g., there is a difference in thickness between portions on the front and rear sides in the conveying direction will be sensed with greater accuracy when the front and rear ends of the articles are sensed by the X-ray device. This suppresses the incidence of erroneous recognition of the conveying-direction length of the conveyed article.

The front and rear ends of the articles may be sensed to have passed through the detection region by using a result of detection performed by the X-ray detection unit, or by installing a sensor or a camera independently from the X-ray detection unit.

An X-ray device according to a second aspect of the present invention is the X-ray device according to the first aspect of the present invention, wherein the control unit switches the threshold value from the first threshold value to the second threshold value when it has been determined that the front end of the article has passed through the detection region. The control unit switches the threshold value from the second threshold value to the first threshold value when it has been determined that the rear end of the article has passed through the detection region.

In the X-ray device according to the second aspect, because the threshold value is switched from the second threshold value to the first threshold value when it has been determined that the rear end of the article has passed through the detection region, it is possible to appropriately sense the front end of the subsequent article according to the first threshold value.

An X-ray device according to a third aspect of the present invention is the X-ray device according to the first or second aspect of the present invention, wherein the control unit senses the front end of the article and the rear end of the article and thereby calculates the conveying-direction length of the article.

In the X-ray device according to the third aspect, information pertaining to the calculated length of the article can be exported.

An X-ray device according to a fourth aspect of the present invention is the X-ray device according to the third aspect of the present invention, wherein an article sorting device distinct from the X-ray device is provided downstream of the article in the conveying direction. The control unit of the X-ray device sends a calculation result for the length of the article to the article sorting device.

In the X-ray device according to the fourth aspect, a sorting action can be performed by the article sorting device at a suitable timing.

An X-ray device according to a fifth aspect of the present invention is the X-ray device according to any of the first to fourth aspects of the present invention, wherein the control unit determines, according to a result of detection performed by the X-ray detection unit, whether the front end of the article has passed through the detection region.

In the X-ray device according to the fifth aspect, it is unnecessary to provide another sensor or camera because the determination regarding whether the front end of the article has passed through the detection region is made according to the result of detection performed by the X-ray detection unit, and the cost of the X-ray device can be reduced.

An X-ray device according to a sixth aspect of the present invention is the X-ray device according to the fifth aspect of the present invention, wherein the second threshold value is greater than the first threshold value. The control unit determines, when the detection value from the X-ray detection unit is less than the first threshold value, that the front end of the article has passed through the detection region. The control unit determines, when the detection value from the X-ray detection unit is greater than the second threshold value, that the rear end of the article has passed through the detection region.

An X-ray device according to a seventh aspect of the present invention is the X-ray device according to any of the first to sixth aspects of the present invention, wherein the control unit automatically determines the second threshold value from the first threshold value.

In the X-ray device according to the seventh aspect, the second threshold value can be automatically calculated from the first threshold value, which is determined through input and adjustment by actually passing the article through the detection region of the X-ray detection unit at a production site. This makes it possible to suppress the cost and labor involved in a trial operation and an adjustment operation.

An X-ray device according to an eighth aspect of the present invention is the X-ray device according to the first or second aspect of the present invention, wherein the control unit compares the amount of decrease per unit time in the detection value from the X-ray detection unit and the first threshold value to determine whether the front end of the article has passed through the detection region. The control unit compares the amount of increase per unit time in the detection value from the X-ray detection unit and the second threshold value to determine whether the rear end of the article has passed through the detection region.

### <Effects of Invention>

In the X-ray device according to the present invention, the incidence of erroneous recognition of the length of a conveyed article is suppressed.

### BRIEF DESCRIPTION OF THE DRAWINGS

[Fig. 1] An external perspective view of an X-ray device according to one embodiment of the present invention;
[Fig. 2] An internal configuration diagram of a shield box of the X-ray device;
[Fig. 3] A schematic diagram showing the principle of X-ray inspection;
[Fig. 4] A diagram showing steps preceding and following the X-ray device;
[Fig. 5] A block diagram of a control computer;
[Fig. 6] A chart showing a control flow in sensing the front end and the rear end of an article;
[Fig. 7] An X-ray image of chicken meat, which is one example of an article for inspection;
[Fig. 8A] An X-ray image for when only a main portion of a single mass of chicken meat is erroneously recognized as a single article; and
[Fig. 8B] An X-ray image for when only a skin portion at the rear end of the single mass of chicken meat is erroneously recognized as a single article.

### DESCRIPTION OF EMBODIMENTS

Embodiments of the present invention are described below with reference to the accompanying drawings. The embodiments below are specific examples of the present invention but do not limit the technical scope of the present invention.

### (1) Overall configuration of X-ray device

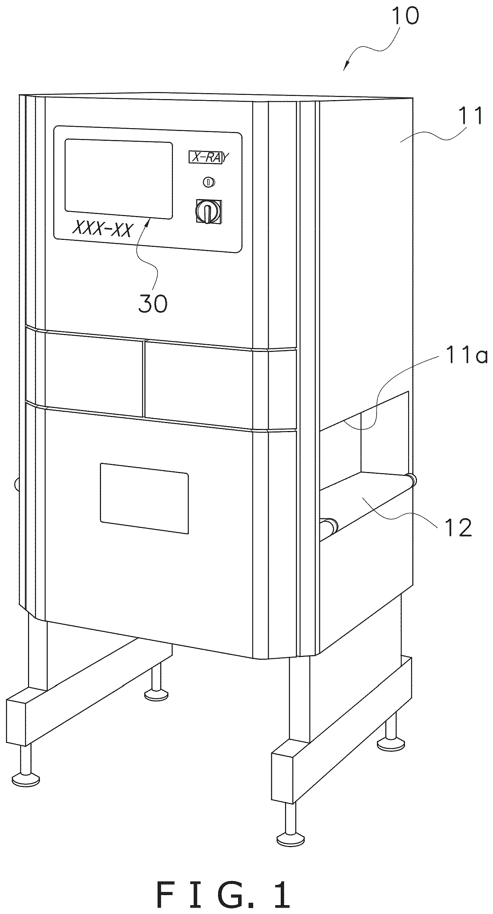

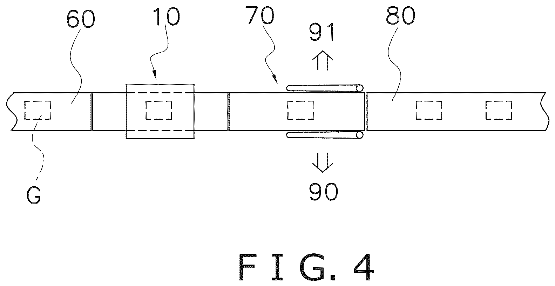

Figure 1 is an external perspective view of an X-ray device 10 according to one embodiment of the present invention. In Fig. 1, the X-ray device 10 is a single device to inspect the quality of articles G, said device being incorporated into a production line (see Fig. 4), and said device irradiating the continuously conveyed articles G with X-rays to evaluate whether the articles G are free of defects.

The articles G, which are inspection objects, are transported to the X-ray device 10 by a first conveyor 60. The articles G are classified as defective or non-defective in the X-ray device 10. Results of the inspection performed by the X-ray device 10 are sent to an article sorting device 70 disposed downstream of the X-ray device 10.

The article sorting device 70 sends articles G evaluated as non-defectives in the X-ray device 10 to a conveyor 80 to discharge compliant articles, and sorts articles G evaluated as defectives in the X-ray device 10 in a defectives-discharging direction 90 or a defectives-discharging direction 91. The article sorting device 70 is distinct from the X-ray device 10. The article sorting device 70 recognizes that an article G has entered by using a light-projecting/receiving photoelectric sensor provided to an entrance of the article sorting device 70, and, on the basis of information pertaining to the conveying-direction length of the articles G sent from an article length calculation unit 21e of the X-ray device 10, which shall be described below, determines a timing for a sorting action. The article sorting device 70 sorts the articles G by moving a guide member or operating an air-jetting mechanism.

### (2) Detailed configuration

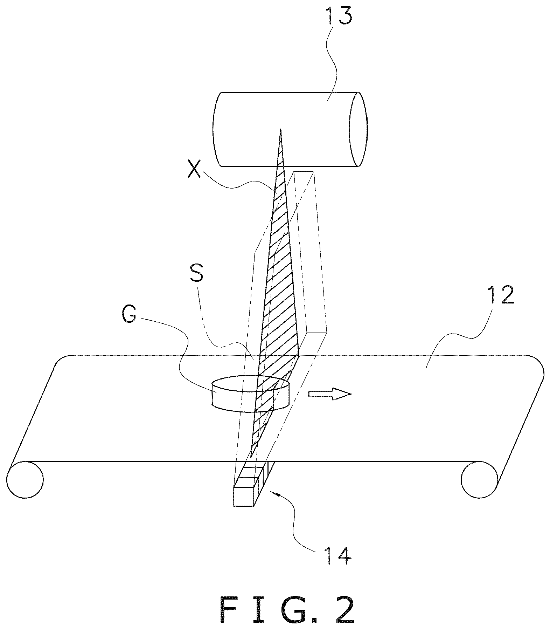

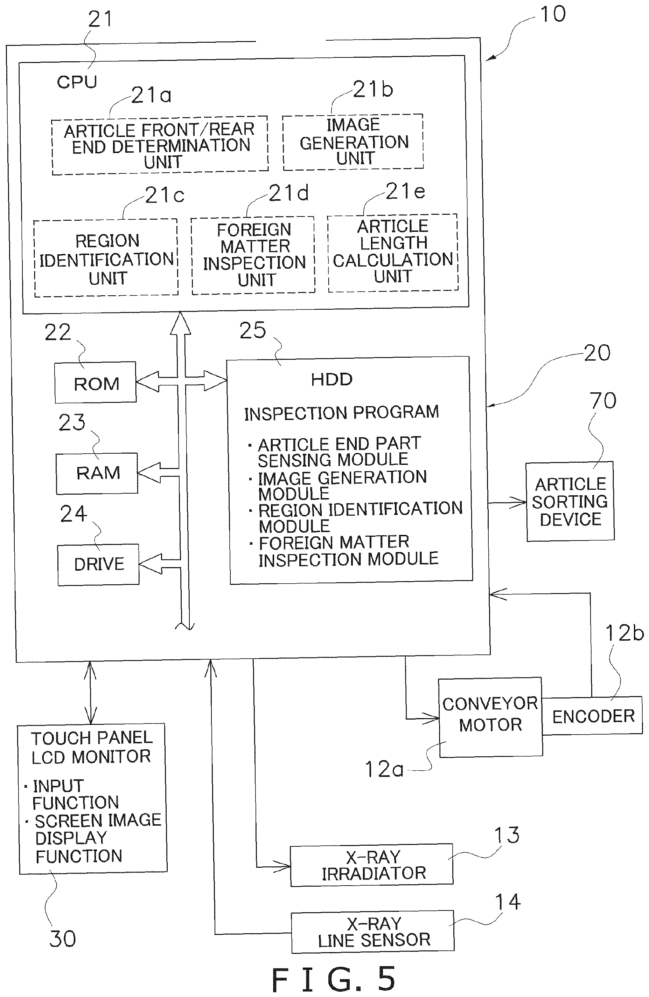

Figure 2 is an internal configuration diagram of a shield box 11 of the X-ray device 10. As shown in Figs. 1 and 2, the X-ray device 10 is mainly configured from the shield box 11, a conveyor 12, an X-ray irradiator 13, an X-ray line sensor 14, a touch-panel-function-equipped monitor 30 (see Fig. 1), and a control computer 20 (see Fig. 5).

### (2-1) Shield box 11

Openings 11a via which the articles G are conveyed into or out from the shield box 11 are provided to surfaces of the shield box 11 on both sides thereof. The openings 11a are blocked by a shielding curtain (not shown) in order to prevent X-ray leakage from the shield box 11. The shielding curtains are formed from a lead-containing rubber and are configured to be pushed aside by the articles G when the articles G pass through the openings 11a.

The conveyor 12, the X-ray irradiator 13, the X-ray line sensor 14, the control computer 20, and the like are accommodated within the shield box 11. The monitor 30 and a power supply switch are disposed on the upper section of the front surface of the shield box 11.

### (2-2) Conveyor 12

The conveyor 12 is a conveying unit to convey the articles G within the shield box 11 and, as shown in Fig. 1, is disposed so as to pass through the openings 11a formed in the surfaces of the shield box 11 on both sides thereof. The conveyor 12 transports the articles G, which are placed on an endless belt, while the belt is caused to rotate by drive rollers driven by a conveyor motor 12a (see Fig. 5).

The conveying speed achieved by the conveyor 12 is precisely controlled, through control of an inverter of the conveyor motor 12a by the control computer 20, so as to be a set speed inputted by an operator. An encoder 12b (see Fig. 5) to detect the conveying speed achieved by the conveyor 12 and sends said conveying speed to the control computer 20 is mounted in the conveyor motor 12a.

### (2-3) X-ray irradiator 13

The X-ray irradiator 13, which is an X-ray irradiation unit, is disposed above the conveyor 12 as shown in Fig. 2 and irradiates a fan-shaped irradiation range X with X-rays aimed toward the X-ray line sensor 14 located therebelow. Specifically, the X-ray irradiator 13 irradiates the articles G being conveyed by the conveyor 12 with the X-rays.

### (2-4) X-ray line sensor 14

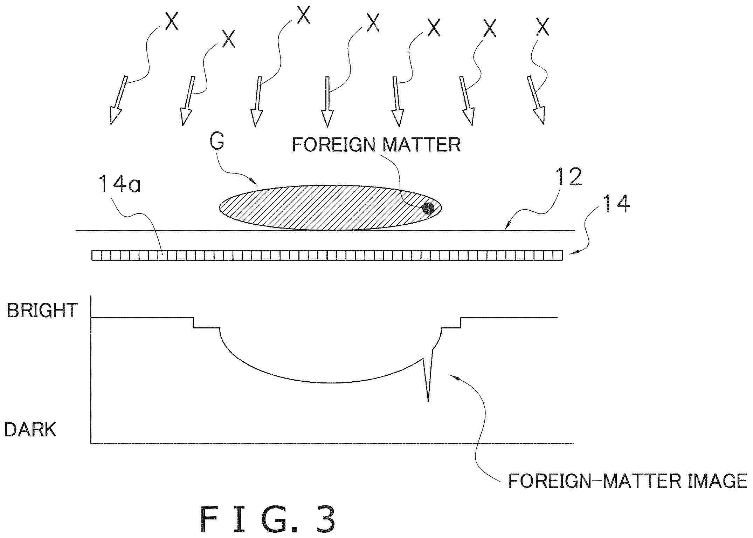

Figure 3 is a schematic diagram showing the principle of X-ray inspection. In Fig. 3, the X-ray line sensor 14, which is an X-ray detection unit, is disposed below the conveyor 12 and has numerous pixel sensors 14a. The number of pixel sensors 14a of the X-ray line sensor 14 is several hundred or at least one thousand. The pixel sensors 14a are horizontally arranged in a linear manner such that the orientation thereof is orthogonal to the conveying direction for the conveyor 12. Each of the pixel sensors 14a detects X-rays transmitted through the articles G or the conveyor 12 and outputs an X-ray fluoroscopic image signal. The X-ray fluoroscopic image signals indicate the brightness (concentration) of the X-rays.

In the X-ray device 10, a space directly above the X-ray line sensor 14 within the shield box 11 is a detection region S. In Fig. 2, the width dimension of the detection region S in the conveying direction (direction indicated by outlined white arrow in Fig. 2) is enlarged for ease of understanding, but the actual width dimension of the detection region S is equal to the width dimension of the pixel sensors 14a, i.e., is small.

The X-ray line sensor 14 detects the X-rays transmitted through the articles G or the conveyor 12 in the detection region S within which the articles G are conveyed.

### (2-5) Monitor 30

The monitor 30 is a full-dot liquid crystal display and displays a screen image to prompt the operator to input, *inter alia,* an inspection parameter required during inspection. The monitor 30 has a touch panel function and receives input of the inspection parameter or the like from the operator.

### (2-6) Control computer 20

Figure 5 is a block diagram of the control computer 20. In Fig. 5, the control computer 20 has a central processing unit (CPU) 21, a read-only memory (ROM) 22, a random-access memory (RAM) 23, a hard disk drive (HDD) 25, and a drive 24 for insertion of storage media or the like.

In the CPU 21, various programs stored in the ROM 22 or the HDD 25 are executed. Inspection parameters and inspection results are saved and accumulated in the HDD 25. The inspection parameters can be set and changed according to inputs from the operator, who uses the touch-panel function of the monitor 30.

The control computer 20 is furthermore provided with a display control circuit (not shown) to control display of data on the monitor 30, a key input circuit (not shown) to accept key input data inputted by the operator via the touch panel of the monitor 30, a communication port (not shown) to enable connection to a printer (not shown) or other external device or to a LAN or other network, and the like.

The units 21 to 25 constituting the control computer 20 are interconnected via a bus line such as an address bus or a data bus.

The control computer 20 is connected to the conveyor motor 12a, the encoder 12b, the X-ray irradiator 13, the X-ray line sensor 14, and the like.

### (3) Configuration of CPU 21

Inspection programs, such as an article end part sensing module, an image generation module, a region identification module, a weight estimation module, a weight diagnosis module, a foreign matter inspection module, an interval detection module, and a catching estimation module, are stored in the HDD 25 of the control computer 20. The CPU 21 of the control computer 20 reads and executes these program modules, thereby acting as a function unit such as an article front/rear end determination unit 21a, an image generation unit 21b, a region identification unit 21c, a foreign matter inspection unit 21d, and an article length calculation unit 21e (see Fig. 5). In the present embodiment, the article end part sensing module, the image generation module, the region identification module, and the foreign matter inspection module are illustrative examples of numerous program modules, and descriptions are given for the article front/rear end determination unit 21a, the image generation unit 21b, the region identification unit 21c, the foreign matter inspection unit 21d, and the article length calculation unit 21e, all of which operate through execution of the program modules.

### (3-1) Article front/rear end determination unit 21a

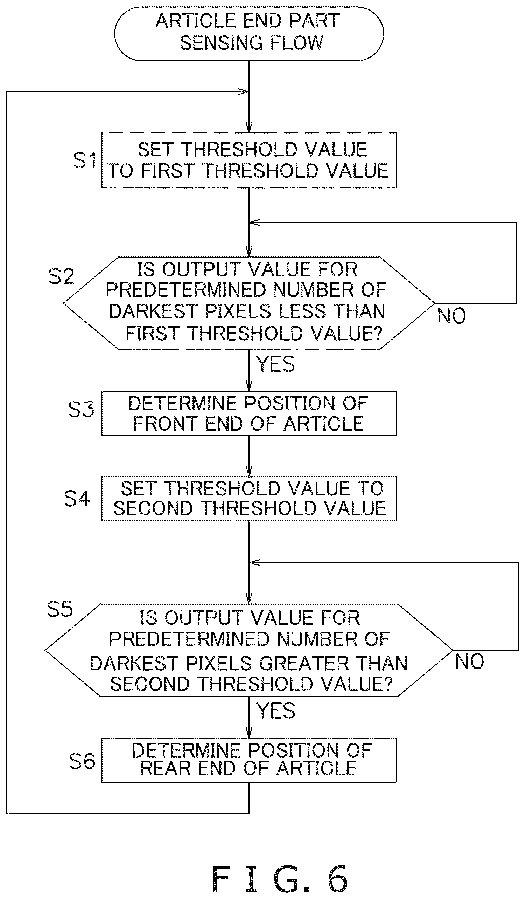

The CPU 21 acting as the article front/rear end determination unit 21a (referred to below as "the article front/rear end determination unit 21a") senses end parts of the articles G and makes a determination in conformance with the control flow shown in Fig. 6. The article front/rear end determination unit 21a compares a detection value from the X-ray line sensor 14 (an output value for one of the X-ray fluoroscopic image signals outputted by the pixel sensors 14a) and a threshold value to sense the conveying-direction front end and the conveying-direction rear end of a given article G. The article front/rear end determination unit 21a has a first threshold value and a second threshold value as threshold values. The article front/rear end determination unit 21a switches the threshold value from the first threshold value to the second threshold value after the front end of the article G has passed through the detection region S and before the rear end of the article G passes through the detection region S.

The article front/rear end determination unit 21a switches the threshold value from the first threshold value to the second threshold value when it has been determined that the front end of the article G has passed through the detection region S. The article front/rear end determination unit 21a switches the threshold value from the second threshold value to the first threshold value when it has been determined that the rear end of the article G has passed through the detection region S.

The action of the article front/rear end determination unit 21a described above shall be illustrated using Fig. 6.

In step S1, the article front/rear end determination unit 21a sets the threshold value to the first threshold value.

In step S2, the article front/rear end determination unit 21a extracts, from the output values from the numerous pixel sensors 14a of the X-ray line sensor 14, either the average value for several of the darkest pixel sensors 14 or the lowest value thereamong, and compares the extracted value and the threshold value (first threshold value). If it is evaluated in step S2 that the extracted value is less than the first threshold value, the procedure advances to step S3, and the article front/rear end determination unit 21a determines that the front end of the article G has passed through the detection region S and determines the position of the front end of the article G.

In cases where it is evaluated in step S2 that the extracted value is not less than the first threshold value, i.e., that the extracted value is equal to or greater than the first threshold value, it is determined that the article G has not yet entered the detection region S, and the evaluation in step S2 is repeated.

After the position of the front end of the article G is determined in step S3, the article front/rear end determination unit 21a, in step S4, immediately sets the threshold value to the second threshold value. The second threshold value is greater ([represents] a brighter value) than the first threshold value.

In step S5, the article front/rear end determination unit 21a extracts, from the output values of the several hundred or at least one thousand pixel sensors 14a of the X-ray line sensor 14, either the average value for several of the darkest pixel sensors 14 or the lowest value thereamong, and compares the extracted value and the threshold value (second threshold value). If it is evaluated in step S5 that the extracted value is greater than the second threshold value, the procedure advances to step S6, and the article front/rear end determination unit 21a determines that the rear end of the article G has passed through the detection region S and determines the position of the rear end of the article G.

### (3-2) Image generation unit 21b

The CPU 21 acting as the image generation unit 21b (referred to below as "the image generation unit 21b") generates an X-ray fluoroscopic image of the article G on the basis of the X-ray fluoroscopic image signals outputted from the X-ray line sensor 14. The image generation unit 21b acquires the X-ray fluoroscopic image signals outputted from the pixel sensors 14a of the X-ray line sensor 14 at short time intervals and, on the basis of the acquired X-ray fluoroscopic image signals, generates an X-ray fluoroscopic image of the article G. Determinations as to whether the front end and the rear end of the article G have passed through the detection region S are made by the article front/rear end determination unit 21a as described above. The image generation unit 21b generates the X-ray fluoroscopic image of the article G by using the X-ray fluoroscopic image signals from slightly before the front end of the article G passes through the detection region S to slightly after the rear end of the article G has passed through the detection region S. Pieces of data for each of the short time intervals relating to the brightness of the X-rays obtained from the pixel sensors 14a of the X-ray line sensor 14 are combined chronologically in a matrix by the image generation unit 21b, whereby an X-ray fluoroscopic image in which the article G appears is generated.

### (3-3) Region identification unit 21c

The CPU 21 acting as the region identification unit 21c (referred to below as "the region identification unit 21c") identifies an article region from the X-ray fluoroscopic image in which the article G appears and which was generated by the image generation unit 21b. The region identification unit 21c calculates the average value for concentration values of the X-rays detected by the pixel sensors 14a, said concentration values being outputted at the same timing from each of the numerous pixel sensors 14a, and employs the calculated value as a representative value for the concentration values of the X-rays at said timing. The region identification unit 21c checks whether the representative value is included within a prescribed range (determines the authenticity of the representative value). The region identification unit 21c superposes the result of the authenticity determination process on the X-ray fluoroscopic image P generated by the image generation unit 21b and employs a region corresponding to a target range as the article region.

### (3-4) Foreign matter inspection unit 21d

The CPU 21 acting as the foreign matter inspection unit 21d (referred to below as "the foreign matter inspection unit 21d") implements a binarization process on the X-ray fluoroscopic image P of the article G generated by the image generation unit 21b, whereby foreign matter included in the article G is detected. More specifically, in cases where a region appearing darker than a preset inspection threshold value is present on the X-ray fluoroscopic image P of the article G, as shown in Fig. 3, it is evaluated that foreign matter is included in the article G, and the article G is evaluated to be non-compliant.

### (3-5) Article length calculation unit 21e

The CPU 21 acting as the article length calculation unit 21e (referred to below as "the article length calculation unit 21e") calculates the conveying-direction length of the article G from the position of the front end of the article G and the position of the rear end thereof, said positions being determined by the article front/rear end determination unit 21a described above. The article length calculation unit 21e sends a calculation result for the length of the article G to the article sorting device 70.

### (4) Features

(4-1)
In the X-ray device 10, the control computer 20 having the CPU 21 compares the detection value from the X-ray line sensor 14 and the threshold value to sense the conveying-direction front end and the conveying-direction rear end of the article G. The first threshold value and the second threshold value are present as threshold values. The article front/rear end determination unit 21a of the control computer 20 switches the threshold value from the first threshold value to the second threshold value during step S3 and step S6 in Fig. 6, i.e., after the front end of the article G has passed through the detection region S and before the rear end of the article G passes through the detection region S.

Therefore, articles G in which, e.g., there is a difference in thickness between portions on the front and rear sides in the conveying direction will be sensed with greater accuracy when the front and rear ends of the articles G are sensed by the X-ray device 10. In particular, the X-ray device 10 is effective with articles G of indeterminate shape and having a low-thickness portion formed on the rear end.

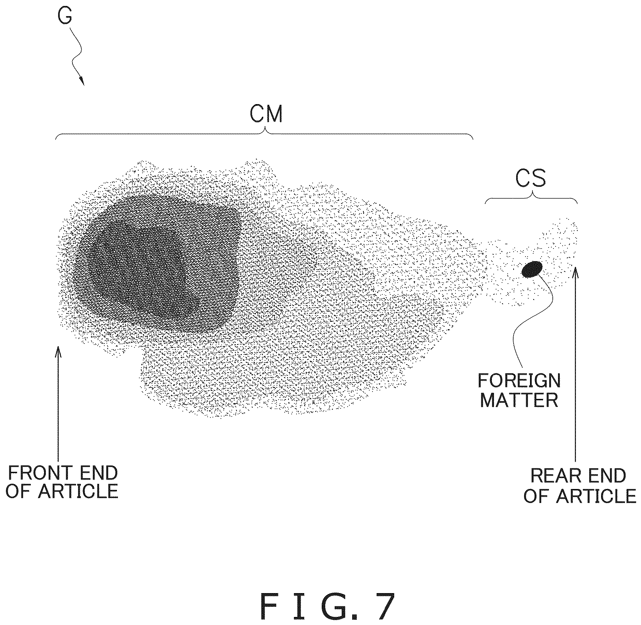

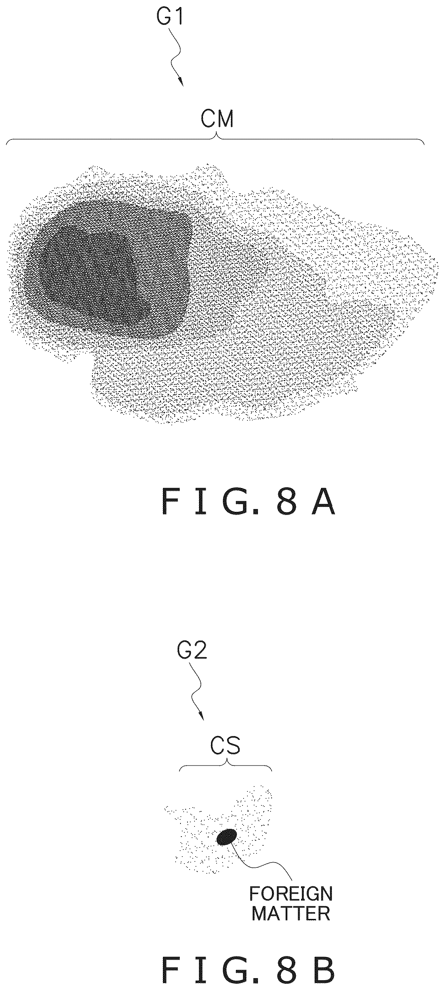

For example, in a case where the cut chicken meat shown in Fig. 7 is the article G, said article G is of indeterminate shape or indeterminate planar size, and when conveyed, the article G readily assumes a state (orientation) in which a thin skin portion CS of the chicken meat is stretched rearward from a main portion CM thereof. In such an article G, the front end is easy to sense, but because the thickness of the skin portion CS is low, the rear end might be erroneously sensed. If a break between articles G is erroneously sensed at a boundary between the main portion CM and the skin portion CS of the article G in Fig. 7, and the main portion CM shown in Fig. 8A and the skin portion CS shown in Fig. 8B are erroneously recognized as one article G1 and another article G2, respectively, information pertaining to the length of the articles G1, G2 will be sent to the article sorting device 70, said information being the result of the erroneous sensing. Accordingly, in cases where foreign matter is detected in the skin portion CS as shown in Figs. 7 and 8B, the article sorting device 70 might perform an action to sort only the chicken skin CS erroneously sensed as the article G2. In such instances, because the skin portion CS is actually integrated with the main portion CM, the article G, in which the center of gravity is located on the main-portion CM side, might be conveyed downstream as a compliant article rather than being sorted.

Such erroneous sensing of articles G does not readily occur in the X-ray device 10 according to the present embodiment. Specifically, in the X-ray device 10, the incidence of erroneous recognition of the length of a conveyed article G is suppressed.

(4-2)
In the X-ray device 10, the threshold value is immediately switched from the first threshold value to the second threshold value when it has been determined that the front end of the article G has passed through the detection region S (see step S4 in Fig. 6). Additionally, the threshold value is immediately switched from the second threshold value to the first threshold value when it has been determined that the rear end of the article G has passed through the detection region S (see step S1 following step S6 in Fig. 6). Therefore, the front end and the rear end of the article G can be reliably sensed even in cases where the conveying-direction length of the article G is short and cases where the conveying interval between a plurality of articles G is short.

(4-3)
In the X-ray device 10, the article length calculation unit 21e sends the calculation result for the length of the article G to the article sorting device 70. This makes it possible, in the article sorting device 70, to control an actuator to perform the sorting action so that, e.g., force is applied near the center of the conveying-direction length of the article G. In cases where a mechanism is employed in which, e.g., a guide member is caused to rotate to sort the article G on the conveyor, the timing of the rotation can be appropriately set. Additionally, in cases where a mechanism is employed in which, e.g., high-pressure air is laterally jetted toward the article G on the conveyor to sort the article G, the high-pressure air can be appropriately jetted near the center of the length of the article G.

(4-4)
In the X-ray device 10, because the determination regarding whether the end parts of the article G have passed through the detection region S is made according to the result of detection performed by the X-ray line sensor 14, it is unnecessary to provide another sensor or camera. This makes it possible to reduce the cost of the X-ray device 10.

### (5) Modifications

(5-1)
In the embodiment described above, foreign matter inspection to detect foreign matter (metal fragments or bone fragments) included in the article G, as an inspection process, was described as a function of the X-ray device 10, in addition to determining the end parts of the article G and calculating the length of the article G. However, as described above, a process other than the foreign matter inclusion inspection process, such as weight estimation, weight diagnosis, or catching estimation, may be performed by the X-ray device 10 as the inspection process. Additionally, a number estimation process to estimate the number of articles G within a packaged article may be performed by the control computer 20 of the X-ray device 10.

(5-2)
In the embodiment described above, the article front/rear end determination unit 21a extracts, from the output values from the numerous pixel sensors 14a of the X-ray line sensor 14, either the average value for several of the darkest values or the lowest value thereamong, and compares the extracted value and the threshold value. The specific output value to be extracted and employed as a representative value from among the output values from the numerous pixel sensors 14a is preferably changed in accordance with the shape, size, and quality of the article G.

Additionally, in the embodiment described above, the output values from the pixel sensors 14a of the X-ray line sensor 14 are directly compared with the threshold value. However, alternatively, the amount of decrease per unit time in the output values from the pixel sensors 14a or the amount of increase per unit time therein can be compared with the threshold value. For example, the amount of decrease per unit time in the detection value can be compared with the first threshold value to determine whether the front end of the article G has passed through the detection region S, and the amount of increase per unit time in the detection value can be compared with the second threshold value to determine whether the rear end of the article G has passed through the detection region S.

(5-3)
In the embodiment described above, the end parts of the articles G may be sensed to have passed through the detection region S by using the result of detection performed by the X-ray line sensor 14. However, alternatively, a photoelectric sensor can be installed at an entrance of the X-ray device 10 or another such location and a timing at which the article G will reach the detection region S can be calculated, or a CCD camera can be installed within the shield box 11 and it can be confirmed that the article G has entered or exited the detection region S.

(5-4)
In the embodiment described above, the first threshold value and the second threshold value of the article front/rear end determination unit 21a are not specifically described. However, it is necessary to change the threshold value in accordance with the type or thickness of the article G or the X-ray transmittance thereof, and it is necessary to adjust the threshold value by circulating actual articles when performing a trial operation or starting usage at a site.

Therefore, although in essence it is necessary to adjust and manually set the first threshold value and the second threshold value, it is permissible, in regard to articles for which there is a fixed relationship between the first threshold value and the second threshold value, to manually adjust only one of these threshold values and automatically calculate the other threshold value. In such instances, when, e.g., the first threshold value is manually set, the control computer 20 reads, *inter alia,* an expression correlating the first threshold value and the second threshold value from a commodity master (set of information relating to the article G) stored in the HDD 25 or the ROM 22 and automatically determines the second threshold value from the first threshold value.

### REFERENCE SIGNS LIST

- 10: X-ray device
- 12: Conveyor (conveying unit)
- 13: X-ray irradiator (X-ray irradiation unit)
- 14: X-ray line sensor (X-ray detection unit)
- 20: Control computer (control unit)
- 21: CPU (control unit)
- 70: Article sorting device
- G: Article
- S: Detection region

### CITATION LIST

### PATENT LITERATURE

[Patent Literature 1] Japanese Laid-open Patent Publication No. 2009-270866

## Claims

1. An X-ray device comprising
a conveying unit configured to convey an article in a conveying direction,
an X-ray irradiation unit configured to irradiate the article being conveyed by the conveying unit with X-rays,
an X-ray detection unit configured to detect the X-rays in a detection region which the article is conveyed to, and
a control unit configured to compare a detection value from the X-ray detection unit and a threshold value to sense a conveying-direction front end and a conveying-direction rear end of the article, wherein
the control unit is further configured:
to have a first threshold value and a second threshold value as threshold values, and
to switch the threshold value from the first threshold value to the second threshold value after the front end of the article has passed through the detection region and before the rear end of the article passes through the detection region.

2. The X-ray device according to claim 1, wherein
the control unit is configured:
to switch the threshold value from the first threshold value to the second threshold value when it has been determined that the front end of the article has passed through the detection region, and
to switch the threshold value from the second threshold value to the first threshold value when it has been determined that the rear end of the article has passed through the detection region.

3. The X-ray device according to claim 1 or 2, wherein
the control unit is further configured to sense the front end of the article and the rear end of the article and thereby calculate the conveying-direction length of the article.

4. The X-ray device according to claim 3, wherein
the control unit is further configured to output a calculation result for the length of the article.

5. The X-ray device according to any one of claims 1 to 4, wherein
the control unit is further configured to determine, according to a result of detection performed by the X-ray detection unit, whether the front end of the article has passed through the detection region.

6. The X-ray device according to claim 5, wherein:
the second threshold value is greater than the first threshold value, and
the control unit is further configured to:
determine, when the detection value from the X-ray detection unit is less than the first threshold value, that the front end of the article has passed through the detection region, and
determine, when the detection value from the X-ray detection unit is greater than the second threshold value, that the rear end of the article has passed through the detection region.

7. The X-ray device according to any one of claims 1 to 6, wherein
the control unit is further configured to automatically determine the second threshold value from the first threshold value.

8. The X-ray device according to claim 1 or 2, wherein
the control unit is further configured to:
compare the amount of decrease per unit time in the detection value from the X-ray detection unit and the first threshold value to determine whether the front end of the article has passed through the detection region, and
compare the amount of increase per unit time in the detection value from the X-ray detection unit and the second threshold value to determine whether the rear end of the article has passed through the detection region.

9. A system comprising the X-ray device according to claim 3 and an article sorting device, wherein
the article sorting device is provided downstream of the X-ray device in the conveying direction, and
the control unit is further configured to send a calculation result for the length of the article to the article sorting device.
